(19) Europäisches Patentamt
European Patent Office
Office européen des brevets

(11) **EP 3 525 329 B1**

(12) **EUROPEAN PATENT SPECIFICATION**

(45) Date of publication and mention
of the grant of the patent:
**25.01.2023  Bulletin 2023/04**

(51) International Patent Classification (IPC):
***H02K 35/00*** *(2006.01)*    *H02K 7/09* *(2006.01)*
***H02K 7/18*** *(2006.01)*

(21) Application number: **18156231.5**

(22) Date of filing: **12.02.2018**

(52) Cooperative Patent Classification (CPC):
**H02K 35/00;** H02K 7/09; H02K 7/1892;
H02K 2201/18

(54) **VIBRATION ENERGY HARVESTER**

VIBRATIONSENERGIEGEWINNER

COLLECTEUR D'ÉNERGIE VIBRATOIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2019  Bulletin 2019/33**

(73) Proprietor: **Nokia Technologies Oy
02610 Espoo (FI)**

(72) Inventors:
• **ODONOGHUE, Declan
Tipperary (IE)**

• **FRIZZELL, Ronan
Meath (IE)**

(74) Representative: **Whiting, Gary
Venner Shipley LLP
5 Stirling House
Stirling Road
The Surrey Research Park
Guildford GU2 7RF (GB)**

(56) References cited:
**EP-A1- 2 882 092        EP-A2- 1 589 643
CN-U- 206 481 204      US-A1- 2011 074 162
US-A1- 2013 342 032   US-A1- 2014 103 751**

## Description

## Field

Various example embodiments relate to vibration energy harvesters.

## Background

Energy harvesting is the conversion of ambient energy to useful electrical energy. Such ambient energy may, for example, be in the form of light, heat or vibrations among others. Ambient vibrational energy is pervasive, with sources including machinery, transportation systems, buildings and bridges, and human motion. The power generated from such vibrational energy can be used for the autonomous operation of low-power electronics, such as wireless sensors. Such sensors currently typically rely on battery power, which limits their wide-scale deployment, as the finite lifetime and environmental impact of batteries affects their applicability. Energy harvesters are a potential enabling technology for distributed networks of these wireless sensors (sometimes referred to as wireless sensor networks (WSNs)), as energy harvesters may be able to supplement or replace batteries for the autonomous operation of the sensors.

Devices that convert vibrational energy into electrical energy are referred to herein as vibration energy harvesters (VEHs). These VEHs are typically spring-mass systems located inside a housing, with external vibration resulting in relative motion between the mass and the housing. This relative motion allows energy to be extracted in a variety of ways, such as using inductive, piezoelectric and electrostatic methods.

Known vibration energy harvesters are typically resonant systems, meaning that when the excitation frequency corresponds to the natural frequency of the spring-mass system, a large response is achieved and energy can be extracted from the system. However, the bandwidth of such a system is narrow, which dramatically decreases the effectiveness of such a device in environments where the vibration spectra are temporally varying. Consequently, a device with improved efficiency which can operate over a wider range of frequencies is desired.

US 2013/0342032 proposes an energy harvesting system comprising a frame, at least one permanent magnet having a North/South direction, and at least one winding wound according to a winding direction around a core comprising a high magnetic permeability material, at least said at least one permanent magnet being mounted on the frame to be able to oscillate relatively to the winding, characterized in that the system comprises a magnetic flux divider arranged between said at least one permanent magnet and said at least one winding in order to concentrate the magnetic flux at discrete positions of maximum magnetic flux then forming equilibrium positions where the winding faces one of the said discrete positions of maximum magnetic flux.

EP 2882092 discloses a harvesting energy apparatus comprising a first spring located inside a housing. The first spring has a structure that surrounds a first mass element which is configured to move by an elastic movement of the first spring, due to a mechanical disturbance of the housing. The movement of the first mass element causes a first energy transducer to convert the kinetic energy of the moving mass element to electric energy. The apparatus further comprises a second spring located inside the first spring and a second mass element also located inside the first spring. The second mass is configured to move relative to the first mass element by a second elastic movement of the second spring. The second elastic movement is caused by the mechanical disturbance of the housing and transferred to the second spring by the first spring.

US 2011/0074162 discloses a vibrational energy harvester including a housing and at least one energy transducer. In an embodiment, a second mass element is arranged to receive collisionally transferred kinetic energy from a first mass element when the housing is in an effective state of mechanical agitation, resulting in relative motion between the housing and at least one of the second and further mass elements. The energy transducer is arranged to be activated by the resulting relative motion between the housing and at least one of the second and further mass elements. In a further embodiment, kinetic energy is collisionally transferred in a velocity-multiplying arrangement from the first to a second or further mass element that has a range of linear ballistic motion. The energy transducer is arranged to be activated, at least in part, by the ballistic motion of the second or further mass element. The energy transducer, or a portion of it, may be attached to the housing, or it may be attached to another of the mass elements.

## Summary

In a first aspect, this specification describes an apparatus as claimed in claim 1.

In a second aspect, this specification describes a method as claimed in claim 7.

In an example, this specification describes an apparatus comprising: a first mass element; a second mass element located within a first mass element such that the second mass element is free to move within the first mass element, wherein the first mass element has a mass larger than the second mass element; and a locking arrangement configured to at least partially lock the second mass element to a housing of the apparatus when the first mass element and/or the second mass element has an acceleration below a first threshold, wherein: either the first mass element includes one or more permanent magnets and the second mass element includes one or more coils or the second mass element includes one or more permanent magnets and first mass element includes one or more coils, such that a current is induced in the coils when the second mass element moves relative to the first mass element. The locking arrangement may comprise a magnetic locking arrangement and/or an electromagnet and/or a mechanical locking arrangement. The apparatus may be a vibration energy harvester.

The locking arrangement may be configured to restrict or prevent transfer of momentum from the first mass element to the second mass element and/or to restrict or prevent relative motion between the first mass element and the second mass element when the first mass element and/or the second mass element has an acceleration below the first threshold.

The apparatus may further comprise a first shaft connected to the second mass element outside the first mass element, wherein the second mass element extends out of the first mass element to connect with the first shaft.

The first mass element may be connected to a top of the apparatus via a first spring and/or to a base of the apparatus via a second spring.

The first and second mass elements may interact to generate velocity amplification through momentum transfer.

## Brief description of the drawings

Example embodiments will now be described, by way of non-limiting examples, with reference to the following schematic drawings, in which:

> FIG. 1 is a block diagram of a system in accordance with an example embodiment;
> FIG. 2 is a highly schematic cross-sectional view of a device in accordance with an example embodiment;
> FIG. 3 is a cross-section of a device in accordance with an example embodiment;
> FIG. 4 is a plan view of a spring that may be used in the device of FIG. 3;
> FIG. 5 is a graph showing power generated in example embodiments;
> FIG. 6 is a cross-section of a device in accordance with an example embodiment;
> FIG. 7 is a circuit schematic in accordance with an example embodiment;
> FIG. 8 is a flow chart showing an algorithm in accordance with an example embodiment; and
> FIG. 9 is a highly schematic cross-sectional view of a part of a device in accordance with an example embodiment.

## Detailed description

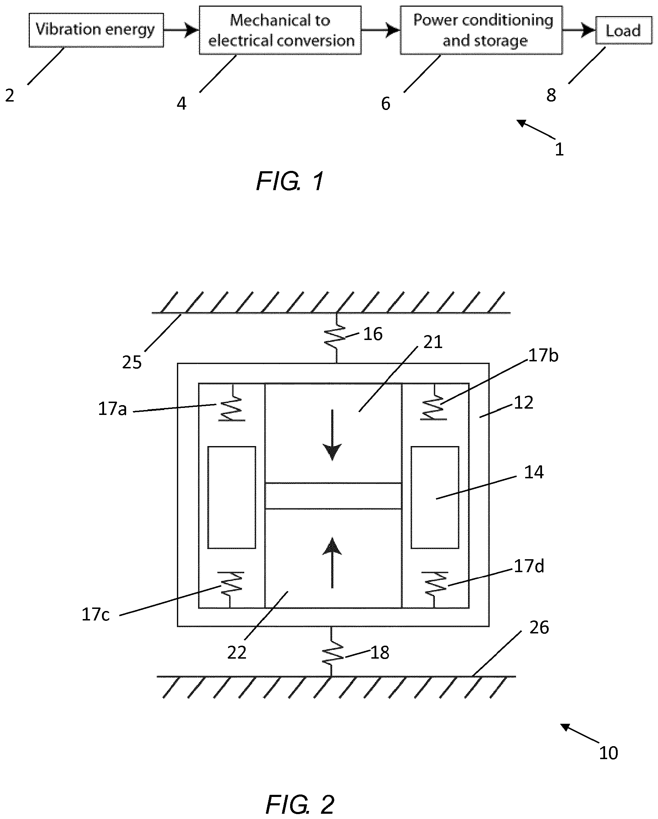

FIG. 1 is a block diagram of a system, indicated generally by the reference numeral 1, in accordance with an example embodiment. The system 1 comprises a source of vibration energy 2, a mechanical to electrical conversion module 4 for converting the vibration energy into electrical energy, a power conditioning module 6 for converting the electrical output of the module 4 into a suitable form and a load 8 that consumes the generated and conditioned electrical energy. The load 8 may be a sensor, as described above, but many alternative uses of the electrical energy (including battery storage) are possible.

FIG. 2 is a highly schematic cross-sectional view of a device, indicated generally by the reference numeral 10, in accordance with an example embodiment. The device 10 may be used as the mechanical to electrical conversion module 4 of the system 1.

The device 10 comprises a first mass element 12 and a second mass element 14. The second mass element 14 is mounted within the first mass element, such that the second mass element is free to move within the first mass element (a so-called 'embedded mass design'). Moreover, the second mass element is smaller than the first mass element, in order to generate velocity amplification (as discussed further below). A first spring 16 is provided to couple the first mass element 12 to a first surface 25 of the device housing and a second spring 18 is provided to couple the first mass element 12 to a second surface 26 of the device housing. Springs 17a to 17d are also used to mediate the impacts between the first and second mass elements 12 and 14 at the upper displacement limit and lower displacement limit of the second mass element. The springs 17a to 17d may be attached to either the first mass element or second mass element, but not both. The first and second masses are free to vibrate in response to a vibration stimulus.

In one embodiment, the first mass element 12 includes one or more permanent magnets (the permanent magnets 21 and 22 labelled in FIG. 2) and the second mass element 14 includes coils. Thus, in response to a vibration stimulus, the second mass element moves relative to the first mass element such that a current is induced in the coils, thus the relative motion between first and second mass elements provides a means for inducing a current in the coils. This current can be detected by extracting signals from the second mass element 14, which are connected to the power conditioning and storage circuitry 6. Thus, for example, electrical leads may extend from the coils of the second mass element 14 to the power conditioning circuitry 6 of the system 1.

Since the device 10 has two mass elements, each constrained to linear movement (one-dimensional motion in a straight line), the device 10 may be referred to as a two-degrees of freedom (2-DOF) vibration energy harvester (VEH).

In a 2-DoF VEH, such as the device 10, velocity amplification may be realised through substantially elastic collisions between the mass elements, where one mass element has a larger mass than the other. If the larger mass element (such the first mass element 12) impacts the smaller mass element (such as the second mass element 14), the velocity of the smaller mass element increases relative to the larger mass element, according to the principles of conservation of momentum. The larger the mass ratio (m1/m2), the greater the velocity gain on impact. In an electromagnetic energy harvester, the power generated is proportional to the relative velocity between the coil and magnetic field squared ($P \propto (dz/dt)^2$). Hence, velocity amplification may be used to increase this relative velocity between the coil and magnetic field, and, consequently, achieve a large increase in power output.

Thus, the system 10 provides a vibration energy harvester using the transfer of kinetic energy through sequential collisions in a series of free-moving mass elements (such as the mass elements 12 and 14).

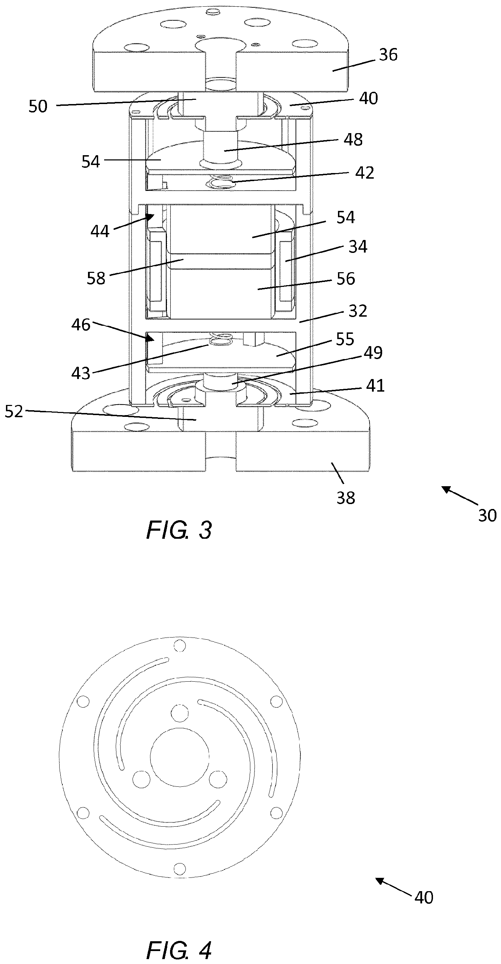

FIG. 3 is a cross-section of a device, indicated generally by the reference numeral 30, in accordance with an example embodiment.

The device 30 comprises a first mass element 32 and a second mass element 34, similar to the first mass element 12 and second mass element 14 described above.

The device also includes a top 36 and a base 38. The top 36 is coupled to the first mass element 32 by a first planar spring 40. Similarly, the base 38 is coupled to the first mass element 32 by a second planar spring 41. The first 40 and second 41 planar springs have similar functions to the springs 16 and 18 described above. (For clarity, FIG. 4 shows a plan view of the first planar spring 40. The second planar spring 41 may be similar.)

Also shown in FIG. 3 is a first helical compression spring 42 and a second helical compression spring 43. First and second helical compressions springs 42 and 43 are also located between the first 32 and second 34 mass elements above and below the first mass element 32 respectively. Although helical springs 42 and 43 are shown in FIG. 3, magnetic springs, which use the repulsive force between two oppositely polarised magnets as a spring force, could be used. A combination of helical compression springs and magnetic springs is an additional option. (Other spring combinations are also possible.) The springs 42 and 43 have similar functions to the springs 17a to 17d described above for the device 10.

Implementing the velocity amplification principle in the 2-DoF embedded mass system may result in friction between the two masses and loss of rectilinear motion on impact. The example embodiment shown in FIG. 3 seeks to mitigate these issues by eliminating direct contact between the first mass element 32 and the second mass element 34. Instead, the second mass element 34 is extended out of the first mass element 32 in the sections indicated generally by the reference numerals 44 and 46, where the second mass element is attached to a first low friction shaft 48 above the first mass element and a second low friction shaft 49 below the first mass element. The first and second low friction shafts, move within complementary low friction tubes 50 and 52 respectively attached to the device housing. This solution may result in a very low friction contact between the second mass element and the device housing, and also may ensure rectilinear motion of the masses through good alignment. Without this feature, on impact with the first mass element 32, the second mass element 34 may move away at a slight angle resulting in an impact with the inner sliding surface of the first mass element 32 and significant energy losses. This good alignment may also ensure high restitution impacts between the masses.

An electromagnetic transducer is formed from the magnetic circuitry and coils of the first 32 and second 34 mass elements of the device 30 respectively. The transducer may be configured in multiple ways. A gain in power is achieved by increasing the relative velocity between the magnetic circuitry and the coil (i.e. between the first and second mass elements). As noted above, this increase in relative velocity is achieved through a velocity amplification effect, which is realised through substantially elastic collisions between the two mass elements. As also noted above, electrical leads may extend from the coils of the second mass element 34, for example to the power condition circuitry 6 of the system 1.

In the specific device 30 shown in FIG. 3, the first mass element 32 includes a first permanent magnet 54 and a second permanent magnet 56, with a soft magnetic spacer 58 sandwiched between the first and second permanent magnets. The first and second permanent magnets 54 and 56 have opposing polarity, but are both attracted to the spacer 58. This results in the magnetic field lines from the permanent magnets being pushed radially outward, through the soft magnetic spacer between the magnets, into the air-gap where the coil is located. Soft magnetic back irons surrounding the magnets complete the magnetic circuitry. This approach results in a highly concentrated and highly directional magnetic field in the coil area.

The configuration of the two mass elements 32, 34, the interposed springs 40 to 43 and the electromagnetic transducer provides a means for transferring momentum from the first mass element to the second mass element and may allow the power generated in the device to be increased, relative to a single-DoF linear VEH, by increasing the relative velocity between the magnet and coil in the transducer. The piecewise linearity (resulting in an effective nonlinearity) induced by the freely moving second mass element 34 may increase the frequency range over which the device may effectively harvest energy. This is a result of a change of effective stiffness as the second mass element 34 spends different portions of time in contact with the springs 40 and 41 as the frequency shifts.

Velocity amplification may be implemented in a 2-DoF electromagnetic VEH in a number of ways. As described herein, the first mass element 32 includes permanent magnets and the second mass element 34 includes coils in which a current is induced. In an alternative arrangement, the permanent magnets are provided by the second mass element and the coils by the first mass element. Thus, different means may be provided for inducing a current in the coils when the second mass element moves relative to the first mass element. In each case, the desired outcome in a velocity amplified electromagnetic energy harvester is to increase the temporal rate of change of magnetic flux in the coil, $d\emptyset/dt$, by increasing the relative velocity between the coil and magnetic field, $dz/dt$ ($z$ and $t$ are the spatial and temporal terms, respectively.) This is evident in the equation below which describes the voltage induced ($V_{ind}$) in an electromagnetic generator, based on Faraday's Law:

$$V_{ind} = \frac{d\emptyset}{dt} = \frac{d\emptyset}{dz}\frac{dz}{dt}$$

As described herein, the larger the mass ratio between the first and second mass elements (m1/m2), the greater the velocity gain on impact. In some forms of the invention, mass ratios of between about 7:1 and 15:1 may be used. Of course, other ratios are possible.

In the embodiment described herein, the transducer is formed by the first and second mass elements. The second mass element 34 may move linearly within the first mass element 32.

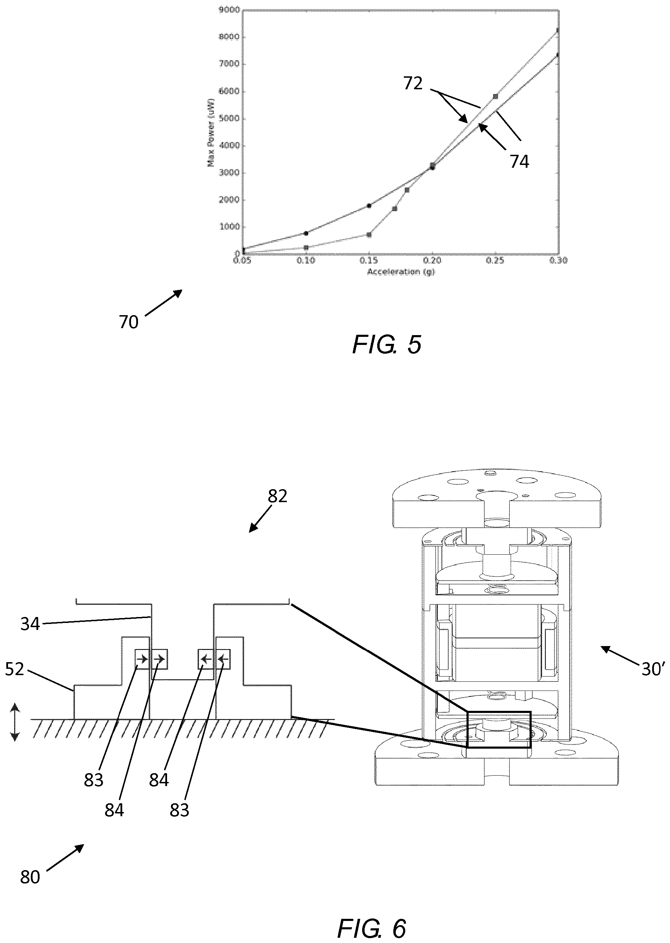

FIG. 5 is a graph, indicated generally by the reference numeral 70, showing power generated in example embodiments. The graph 70 includes acceleration plotted on the x-axis and maximum power plotted on the y-axis. The graph 70 includes a first plot 72 and a second plot 74. The first plot 72 shows maximum power extracted from the device 30 described above at different acceleration levels of the first mass element 32.

At low acceleration levels, the inertia of the first mass element 32 is low and so momentum transfer from the first mass element 32 to the second mass element 34 is low. As a result, the first and second mass elements tend to move in phase with each other, such that there is little relative motion. Since the energy extracted from the device 30 is dependent on relative movement between the first and second mass elements, there is little power extracted at low accelerations. This is apparent from the plot 72, which shows low power extracted at low accelerations, with the power extracted increasing after a threshold acceleration level has been reached. In the example results of the plot 72, that threshold acceleration level is about 0.15 g.

The plot 72 shows the performance of an example 2-DOF vibration energy harvester (VEH). FIG. 5 shows a second plot, indicated generally by the reference numeral 74, showing the performance of an example 1-DOF VEH. As shown in FIG. 5, the performance of the example 2-DOF VEH (as indicated by the plot 72) is superior at higher accelerations, but the performance of the example 1-DOF VEH (as indicated by the plot 74) is superior at lower accelerations.

Accordingly, by modifying the device 30 described above to operate as a 1-DOF VEH at low accelerations, whilst retaining the 2-DOF operation at higher accelerations, the overall performance of the system can be improved. Furthermore, the spectral content of vibrations will typically vary from application to application. Accordingly, it would be advantageous to provide a VEH that responds effectively under different input conditions.

FIG. 6 is a cross-section of a device, indicated generally by the reference numeral 80, in accordance with an example embodiment. The device 80 is a vibration energy harvester (VEH) including a VEH 30' that is similar to the 2-DOF VEH 30 described above. The device 80 also includes a locking arrangement, indicated generally by the reference numeral 82.

As shown in FIG. 6, the locking arrangement 82 is configured to at least partially lock the second mass element 34 of the device 80 to the low friction tube 52 at the base of the VEH 30'. The example locking arrangement 82 shown in FIG. 6 comprises a first low strength permanent magnet 83 in the low friction tube 52 and a second low strength permanent magnet 84 in the shaft of the second mass element 34 that engages with the low friction tube 52. The magnets 83 and 84, which may be ring magnets with radial magnetisation, are arranged such that they are attractive to one another.

At low accelerations, the attraction between the first magnet 83 and the second magnet 84 is sufficient to at least partially lock the second mass element 34 of the device 80 to the low friction tube 52, thereby effectively locking the second mass element to the housing of the device 80. When the acceleration increases, the inertial force on the second mass element 34 overcomes the attractive magnetic force, allowing the second mass element 34 to move freely when impacted by the first mass element 32. Thus, when the acceleration is below a first threshold, the device 80 has the advantages of a 1-DOF VEH, but when the acceleration is above the first threshold, the device 80 has the advantages of a 2-DOF VEH. In the example shown in Figure 5, the first threshold is of the order of 0.15g.

It should be noted that the magnetic force required to lock the second mass element to the housing of the apparatus 80 may be very small. This is because the locking arrangement may only be required when the relevant acceleration is very small. Thus, the momentum that would be transferred from the first mass element 32 to the second mass element 34 would be small, leading to very little movement of the second mass element. The magnetic force need only be strong enough to prevent (or at least partially prevent) this small movement. Since the magnetic force required is small, the locking mechanism has very little impact of the functionality of the VEH 30' at higher acceleration levels.

According to another example embodiment, one or both of the magnets 83 and 84 may be implemented as an electromagnet. In such an arrangement, when the acceleration is deemed to be below a relevant threshold, the electromagnet(s) may be activated in order to activate the locking mechanism.

As described above, the example locking arrangement 82 shown in FIG. 6 is configured to at least partially lock the second mass element 34 of the device 30 to the low friction tube 52 at the base of the VEH 30'. According to another example embodiment, the locking arrangement 82 may be provided to at least partially lock the second mass element 34 to the low friction tube 50 at the top of the VEH 30', to both the low friction tubes 50 and 52 and/or to any other part of the housing of the VEH 30'.

The magnetic locking arrangement 82 is one example of a possible locking arrangement; many alternative means for at least partially locking the second mass exist. A mechanical implementation of the locking mechanism could use friction between the shaft of the second mass element 34 and the housing of the VEH (e.g. the base or the top of the housing, such as one or both of the low friction tubes 50 and 52). In this case, when the acceleration is low, the friction force between the second mass element 34 and the VEH housing is greater than the inertial force of the mass element, resulting in the second mass element being effectively locked in place. Once the acceleration is sufficient (i.e. above a relevant threshold), the inertial force on the second mass element 34 overcomes the friction force, allowing the second mass element to move freely when impacted by the first mass element 32.

In one example embodiment, the first mass element 32 of the devices 30 and 30' comprises neodymium iron boron (NdFeB) permanent magnets and soft magnetic back irons, while the second mass element 34 comprises a plastic coil holder with a copper coil wound around it. The first mass element 32 is attached to two springs through the base and cap of the housing (the springs 40 and 42 described above). These springs are in parallel, meaning the effective spring stiffness is the sum of their stiffnesses. Using two springs, rather than one, may eliminate moments which may be present at low frequencies, such that the first mass element 32 would tend to move linearly and out-of-plane with the external vibrations. Meanwhile, the second mass element 34 is free to move within the cavity of the first mass element, receiving kinetic energy upon favourable impacts with the first mass element. This lack of a spring force should allow the second mass element to achieve ballistic motion and higher velocities. To allow for high restitution impacts between the first and second mass elements, high Q-factor springs may be interposed between the first and second mass elements at the displacement limits of the second mass element (the springs 42 and 43 described above), but are attached to either the first or second mass element (the first mass element 32 in the system 30).

Due to the nature of the impacts between the first and second mass elements, the first and second mass elements and the device housing should remain aligned. If this is not the case, upon impact with the first mass element, any misalignment may tend to result in the contact between the second mass element and the spring attached to the first mass element occurring at an angle, resulting in energy losses in the impact. Moreover, after impacting the first mass element, the second mass element is likely to impact the sliding surface it is in contact with, rather than just moving smoothly against that surface, tending to result in further energy losses. In order to ensure the alignment of the second mass element with the first mass element and the housing, and to reduce the friction acting against the second mass element, all contact between the second mass element and other elements of the harvester occur externally to the first mass element. Thus, as described above, two cylindrical shafts 48 and 49 of low friction material, such as polytetrafluoroethylene (PTFE), are attached to the second mass element below and above the first mass element 32. These shafts slide within hollow cylindrical tubes (the tubes 50 and 52 described above) of a complementary low friction material that are attached to the device housing. All sliding contact with the second mass element is in these low friction areas. In this example, it is only through the medium of the springs 42 and 43 that the first and second mass element contact each other when the masses are impacting. In addition, the arrangement allows a single spring to facilitate the impacts between the first and second mass elements. Without the approach described here, the design would typically comprise a number of springs between the first and second mass elements, which would tend to lead to energy losses in the system.

As the second mass element 34 is embedded within the first mass element 32, a mechanism has been developed which extends the second mass element out of the first mass element to allow the contact between the first and second mass elements to be eliminated. The low friction shafts 48, 49 are attached to the second mass elements in regions external to the first mass element and can slide freely within the tubes 50 and 52 that are connected to the housing. To do this, a number of holes are provided in the base and cap of the first mass element (in the regions 44 and 46 described above). Shafts connecting the coil holder portion of the second mass element 34 and the low friction shafts 48, 49 outside the first mass element protrude through these holes, with the connection being made to panels 54 and 55 of the shafts 48 and 49 respectively. Depending on the transducer architecture employed, the presence of these holes may negatively affect the coupling between the coil and magnetic circuitry; however, it is considered that reducing friction may be important in developing a VEH which may operate effectively at low accelerations. Moreover, depending on the transducer design, there may be squeeze film damping (resulting from compressed air). These holes may act as a release to mitigate such effects.

A range of spring types and combinations may be employed in the embedded mass configuration. The springs 40, 41, attached to the first mass element as shown in FIG. 3 are planar springs, which may provide a high spring force in a space efficient manner (see FIG.

4). These planar springs could be replaced by other spring types, such as magnetic springs, which utilise the repulsive force between oppositely polarised magnets to generate a spring force. One benefit of magnetic springs may be the elimination of thermoelastic damping in the mechanical springs. However, this would require an external shell to allow the first mass element to slide within, which may introduce additional friction. Springs between the first and second mass elements may be implemented as compression springs, which provide a spring force in compression. Again, these mechanical springs (the springs 42, 43 described above) may be replaced by other spring types, such as magnetic springs to reduce damping. As magnetic springs provide a non-linear restoring force, substituting the mechanical springs for magnetic springs may have a significant effect on the device dynamics.

A multitude of transducer architectures (coil-magnet arrangements) could be implemented in the 2-DoF velocity amplified VEH described. An objective of such architectures may be to maximise the flux gradient in the coil, $d\emptyset/dz.$ As discussed above with reference to FIG. 3, this may be done by concentrating the magnetic field in the coil area through magnetic circuitry, typically featuring soft magnetic back-irons and/or magnets of opposing polarity. In the example shown in FIG. 3, a magnet-through-coil architecture is employed. The magnetic circuitry is effectively the magnetic domains of two loudspeakers placed face-to-face. The magnets are arranged such that the polarities are opposing. This results in the magnetic field lines being pushed radially outward, through the soft magnetic spacer between the magnets, into the air-gap where the coil is located. The soft magnetic back irons surrounding the magnets complete the magnetic circuitry. This approach results in a highly concentrated and highly directional magnetic field in the coil area.

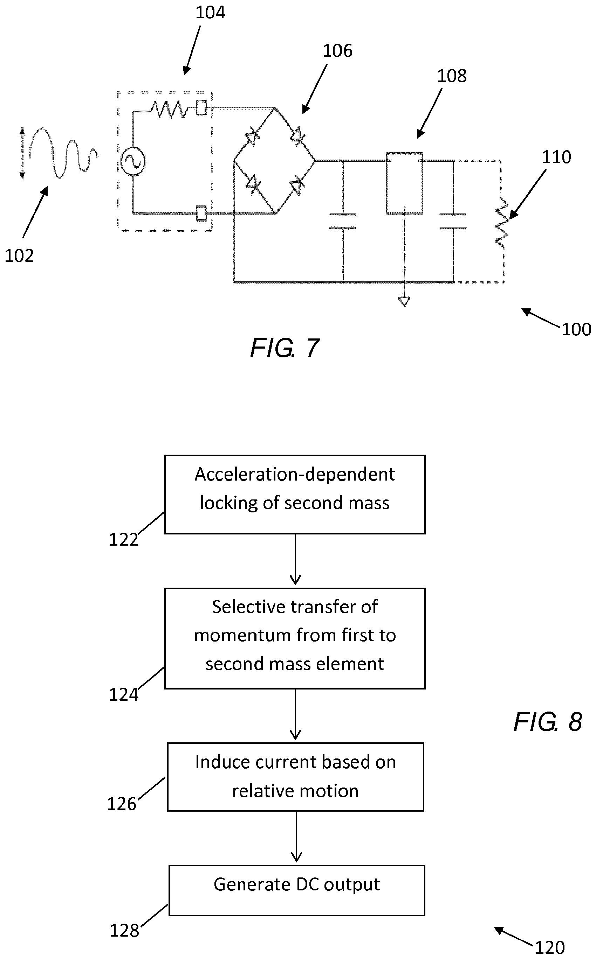

FIG. 7 is a circuit schematic, indicated generally by the reference numeral 100, in accordance with an example embodiment. As shown in FIG. 7, the system 100 comprises a vibration energy harvester 104, for example the VEH 30 or 80 described above. The VEH output power, extracted from the vibrating energy source, is AC. In order to power a sensor (or some other device) or to store power in a battery, regulated DC power may be required. In the example system 100, the harvester 104 provides an alternating current (AC) output to a rectifier circuit 106 that provides a direct current (DC) output stored over a capacitor of a regulator circuit 108. The regulator 108 provides power management and regulation functions in a manner well known in the art and provides a DC output at a certain voltage, if required, for example to a load, such as a sensor/actuator 110.

Thus, the system 100 is able to use a vibration input, indicated generally by the reference numeral 102, to generate power for driving an output, such as the load 110.

FIG. 8 is a flow chart, indicated generally by the reference numeral 120, showing an algorithm in accordance with an example embodiment. The algorithm 120 starts at operation 122, where the second mass element 34 is selectively locked to the housing of the vibration energy harvester (VEH) 80 depending on the acceleration of the first and/or second mass element.

At operation 124, momentum is selectively transferred from the first mass element 32 to the second mass element 34 in response to a vibration (e.g. vibration energy 102). The extent of any such momentum transfer may depend on the action of the locking mechanism(s).

At operation 126, current is induced in a coil of the second mass element 34 in response to the coil moving through the magnetic field generated by the permanent magnets of the first mass element 32 (i.e. in response to the relative motion of the first and second mass elements). At operation 128, the AC current generated in operation 126 may be converted into a DC output, for example using the rectifier and regular circuits of the system 100 described above, or some similar systems.

If desired, the different functions discussed herein may be performed in a different order and/or concurrently with each other. Furthermore, if desired, one or more of the above-described functions may be optional or may be combined. Similarly, it will also be appreciated that the flow diagram of FIG. 8 is an example only and that various operations depicted therein may be omitted, reordered and/or combined.

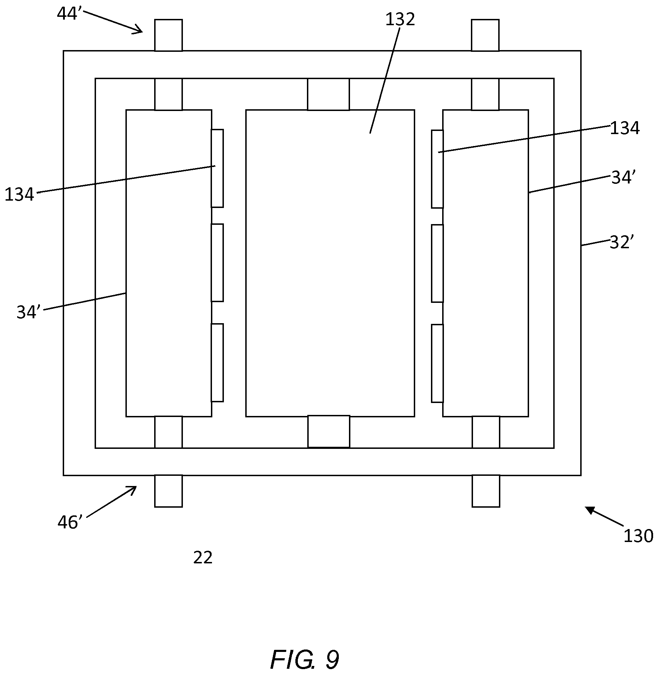

It will be appreciated that the above described example embodiments are purely illustrative and are not limiting on the scope of the invention. Other variations and modifications will be apparent to persons skilled in the art upon reading the present specification. By way of example, the "top" and "bottom" of any device described herein may be interchangeable. The invention may be applicable to systems having many different sizes, for example, having micro- or macro-scales. Furthermore, although the arrangements above describe the first mass element 32 including permanent magnets and the second mass element 34 including coils, the opposite arrangement is possible. For example, FIG. 9 is an example of a highly schematic cross-sectional view of a part of a device, indicated generally by the reference numeral 130. The device 130 includes a first mass element 32' and a second mass element 34'. The first mass element includes a coil 132. The second mass element includes a number of permanent magnets 134. As with the device 30, the second mass element 34' is extended out of the first mass element 32' in the sections indicated generally by the reference numerals 44' and 46' (corresponding to the sections 44 and 46 of the device 30 described above). Thus, the second element can connect to low friction shafts (not shown) in a similar manner to the corresponding second element in the devices 30 and 80.

Although various aspects of the invention are set out in the independent claims, other aspects of the invention comprise other combinations of features as set forth in the dependent claims with the features of the independent claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:

   means for transferring momentum from a first mass element (32, 32') to a second mass element (34, 34') located within the first mass element so that kinetic energy is transferred from the first mass element to the second mass element through sequential collisions, the first mass element having a mass larger than the second mass element, wherein either the first mass element includes one or more permanent magnets and the second mass element includes one or more coils or the second mass element includes one or more permanent magnets and first mass element includes one or more coils, wherein the second mass element is mounted within the first mass element such that the second mass element is free to move within the first mass element and wherein the first mass element (32) is connected to a top of the apparatus via a first spring (40) and/or to a base of the apparatus via a second spring (41);
   means for at least partially locking the second mass element to a housing of the apparatus when the first mass element and/or the second mass element has an acceleration below a first threshold, wherein the means for at least partially locking the second mass element to the housing comprises a magnetic locking arrangement (82); and
   means for inducing a current in the coils when the second mass element moves relative to the first mass element,
   wherein:

      the means for at least partially locking the second mass element to the housing is configured to restrict or prevent transfer of momentum from the first mass element to the second mass element and/or to restrict or prevent relative motion between the first mass element and the second mass element when the first mass element and/or the second mass element has an acceleration below the first threshold,
      wherein an attractive force of the magnetic locking arrangement is overcome when the acceleration is above the first threshold such that an inertial force on the second mass element overcomes the attractive magnetic force, allowing the second mass element to move freely when impacted by the first mass element; and
      in use, the first and second mass elements and the housing of the apparatus remain aligned.

2. An apparatus as claimed in claim 1, wherein the means for at least partially locking the second mass element to the housing comprises an electromagnet.

3. An apparatus as claimed in any one of claims 1 to 2, wherein the means for at least partially locking the second mass element to the housing comprises a magnetic and a mechanical locking arrangement.

4. An apparatus as claimed in any one of the preceding claims, further comprising a first shaft (48, 49) connected to the second mass element outside the first mass element, wherein the second mass element (34, 34') extends out of the first mass element (32, 32') to connect with the first shaft.

5. An apparatus as claimed in any one of the preceding claims, wherein the first and second mass elements interact to generate velocity amplification through momentum transfer.

6. An apparatus as claimed in any one of the preceding claims, wherein the apparatus is a vibration energy harvester.

7. A method comprising:

   transferring momentum from a first mass element (32, 32') to a second mass element (34, 34') located within the first mass element so that kinetic energy is transferred from the first mass element to the second mass element through sequential collisions, the first mass element having a mass larger than the second mass element, wherein either the first mass element includes one or more permanent magnets and the second mass element includes one or more coils or the second mass element includes one or more permanent magnets and first mass element includes one or more coils, wherein the second mass element is mounted within the first mass element such that the second mass element is free to move within the first mass element and wherein transfer of momentum from the first mass element to the second mass element is restricted or prevented when the first mass element and/or the second mass element has an acceleration below the first threshold, wherein the first mass element (32) is connected to a top of an apparatus via a first spring and/or to a base of the apparatus via a second spring and wherein, in use, the first and second mass elements and a housing of the apparatus remain aligned;

at least partially locking the second mass element to the housing, by a magnetic locking arrangement (82), when the first mass element and/or the second mass element has an acceleration below a first threshold, wherein an attractive force of the magnetic locking arrangement is overcome when the acceleration is above the first threshold such that an inertial force on the second mass element overcomes the attractive magnetic force, allowing the second mass element to move freely when impacted by the first mass element; and

inducing a current in the coils when the second mass element moves relative to the first mass element.

8. A method as claimed in claim 7, wherein momentum is transferred by interaction including substantially elastic collisions.

9. A method as claimed in any one of claims 7 to 8, wherein the second mass element is at least partially locked to the housing of the apparatus when the first mass element and/or the second mass element has an acceleration below a first threshold by a magnetic and a mechanical locking arrangement.

10. A system comprising an apparatus as claimed in any one of claims 1 to 6, or implemented according to the method of any one of claims 7 to 9, the system further comprising means for converting the current induced in the coils into a DC supply.

11. A sensor comprising a power supply incorporating an apparatus as claimed in any one of claims 1 to 6 or a system as claimed in claim 10.

## Patentansprüche

1. Vorrichtung, die Folgendes umfasst:

Mittel zum Übertragen eines Moments von einem ersten Masseelement (32, 32') zu einem zweiten Masseelement (34, 34'), das sich im ersten Masseelement befindet, derart, dass durch sequenzielle Kollisionen kinetische Energie vom ersten Masseelement zum zweiten Masseelement übertragen wird, wobei das erste Masseelement eine Masse aufweist, die größer ist als das zweite Masseelement, wobei entweder das erste Masseelement einen oder mehrere Permanentmagneten beinhaltet und das zweite Masseelement eine oder mehrere Spulen beinhaltet oder das zweite Masseelement einen oder mehrere Permanentmagneten beinhaltet und das erste Masseelement eine oder mehrere Spulen beinhaltet, wobei das zweite Masseelement derart im ersten Masseelement montiert ist, dass sich das zweite Masseelement frei im ersten Masseelement bewegen kann, und wobei das erste Masseelement (32) via eine erste Feder (40) mit einer Oberseite der Vorrichtung und/oder via eine zweite Feder (41) mit einer Basis der Vorrichtung verbunden ist;

Mittel zum mindestens teilweisen Verriegeln des zweiten Masselements an einem Gehäuse der Vorrichtung, wenn das erste Masseelement und/oder das zweite Masseelement eine Beschleunigung unter einem ersten Schwellwert aufweist, wobei das Mittel zum mindestens teilweisen Verriegeln des zweiten Masseelements am Gehäuse eine magnetische Verriegelungsanordnung (82) umfasst; und

Mittel zum Induzieren eines Stroms in den Spulen, wenn sich das zweite Masseelement relativ zum ersten Masseelement bewegt,

wobei:

die Mittel zum mindestens teilweisen Verriegeln des zweiten Masselements am Gehäuse dazu ausgelegt sind, die Übertragung eines Moments vom ersten Masseelement zum zweiten Masseelement einzuschränken oder zu verhindern und/oder eine relative Bewegung zwischen dem ersten Masseelement und dem zweiten Masseelement einzuschränken oder zu verhindern, wenn das erste Masseelement und/oder das zweite Masseelement eine Beschleunigung unter dem ersten Schwellwert aufweist,

wobei eine Anziehungskraft der magnetischen Verriegelungsanordnung überwunden wird, wenn die Beschleunigung über dem ersten Schwellwert liegt, derart, dass eine Trägheitskraft am zweiten Masseelement die Magnetanziehungskraft überwindet, wodurch sich das zweite Masseelement frei bewegen kann, wenn das erste Masseelement dagegen stößt; und

das erste und das zweite Masseelement und das Gehäuse der Vorrichtung im Gebrauch ausgerichtet bleiben.

2. Vorrichtung nach Anspruch 1, wobei die Mittel zum mindestens teilweisen Verriegeln des zweiten Masselements am Gehäuse einen Elektromagneten umfassen.

3. Vorrichtung nach einem der Ansprüche 1 bis 2, wobei die Mittel zum mindestens teilweisen Verriegeln des zweiten Masseelements am Gehäuse eine magnetische und eine mechanische Verriegelungsanordnung umfassen.

4. Vorrichtung nach einem der vorhergehenden Ansprüche, die ferner eine erste Welle (48, 49) umfasst, die mit dem zweiten Masseelement außerhalb des ersten Masseelements verbunden ist, wobei sich das zweite Masseelement (34, 34') aus dem ersten Masseelement (32, 32') erstreckt, um sich mit der ersten Welle zu verbinden.

5. Vorrichtung nach einem der vorhergehenden Ansprüche, wobei das erste und das zweite Masseelement interagieren, um über eine Momentübertragung eine Geschwindigkeitsverstärkung zu erzeugen.

6. Vorrichtung nach einem der vorhergehenden Ansprüche, wobei die Vorrichtung eine Vibrationsenergieerntemaschine ist.

7. Verfahren, das Folgendes umfasst:

     Übertragen eines Moments von einem ersten Masseelement (32, 32') zu einem zweiten Masseelement (34, 34'), das sich im ersten Masseelement befindet, derart, dass durch sequenzielle Kollisionen kinetische Energie vom ersten Masseelement zum zweiten Masseelement übertragen wird, wobei das erste Masseelement eine Masse aufweist, die größer ist als das zweite Masseelement, wobei entweder das erste Masseelement einen oder mehrere Permanentmagneten beinhaltet und das zweite Masseelement eine oder mehrere Spulen beinhaltet oder das zweite Masseelement einen oder mehrere Permanentmagneten beinhaltet und das erste Masseelement eine oder mehrere Spulen beinhaltet, wobei das zweite Masseelement derart im ersten Masseelement montiert ist, dass sich das zweite Masseelement frei im ersten Masseelement bewegen kann, und wobei die Übertragung des Moments vom ersten Masseelement zum zweiten Masseelement eingeschränkt oder verhindert wird, wenn das erste Masseelement und/oder das zweite Masseelement eine Beschleunigung unter dem ersten Schwellwert aufweist, wobei das erste Masseelement (32) via eine erste Feder mit einer Oberseite einer Vorrichtung und/oder via eine zweite Feder mit einer Basis der Vorrichtung verbunden ist und wobei das erste und das zweite Masseelement und ein Gehäuse der Vorrichtung im Gebrauch ausgerichtet bleiben;
     mindestens teilweises Verriegeln des zweiten Masseelements durch eine magnetische Verriegelungsanordnung (82) am Gehäuse, wenn das erste Masseelement und/oder das zweite Masseelement eine Beschleunigung unter einem ersten Schwellwert aufweist, wobei eine Anziehungskraft der magnetischen Verriegelungsanordnung überwunden wird, wenn die Beschleunigung über dem ersten Schwellwert liegt, derart, dass eine Trägheitskraft am zweiten Masseelement die Magnetanziehungskraft überwindet, wodurch sich das zweite Masseelement frei bewegen kann, wenn das erste Masseelement dagegen stößt; und
Induzieren eines Stroms in den Spulen, wenn sich das zweite Masseelement relativ zum ersten Masseelement bewegt.

8. Verfahren nach Anspruch 7, wobei das Moment durch Interaktion übertragen wird, die im Wesentlichen elastische Kollisionen beinhaltet.

9. Verfahren nach einem der Ansprüche 7 bis 8, wobei das zweite Masseelement durch eine magnetische und eine mechanische Verriegelungsanordnung mindestens teilweise am Gehäuse der Vorrichtung verriegelt ist, wenn das erste Masseelement und/oder das zweite Masseelement eine Beschleunigung unter einem ersten Schwellwert aufweist.

10. System, das eine Vorrichtung nach einem der Ansprüche 1 bis 6 umfasst oder gemäß dem Verfahren von einem der Ansprüche 7 bis 9 implementiert ist, wobei das System ferner Mittel zum Umwandeln des in den Spulen induzierten Stroms in eine DC-Versorgung umfasst.

11. Sensor, der eine Leistungsversorgung umfasst, die in eine Vorrichtung nach einem der Ansprüche 1 bis 6 oder ein System nach Anspruch 10 integriert ist.

**Revendications**

1. Appareil comprenant :

     un moyen pour transférer une quantité de mouvement d'un premier élément de masse (32, 32') à un deuxième élément de masse (34, 34') situé à l'intérieur du premier élément de masse, de sorte que de l'énergie cinétique soit transférée du premier élément de masse au deuxième élément de masse par des collisions séquentielles, le premier élément de masse ayant une masse plus grande que le deuxième élément de masse, dans lequel soit le premier élément de masse comporte un ou plusieurs aimants permanents et le deuxième élément de masse comporte une ou plusieurs bobines, soit le deuxième élément de masse comporte un ou plusieurs aimants permanents et le premier élément de masse comporte une ou plusieurs bobines, dans lequel le deuxième élément de masse est monté à l'intérieur du premier élément de masse de sorte que le deuxième élément de masse soit libre de se déplacer à l'intérieur du premier élément de masse, et dans lequel le premier élément de masse (32) est connecté à un sommet de l'appareil via un premier ressort (40) et/ou à une base de l'appareil via un deuxième ressort (41) ;
un moyen pour verrouiller au moins partiellement le deuxième élément de masse sur un boîtier de l'appareil lorsque le premier élément de masse et/ou le deuxième élément de masse a une accélération en dessous d'un premier seuil, dans lequel le moyen pour verrouiller au moins partiellement le deuxième élément de masse sur le boîtier comprend un agencement de verrouillage magnétique (82) ; et
un moyen pour induire un courant dans les bobines lorsque le deuxième élément de masse se déplace par rapport au premier élément de masse,
dans lequel :

le moyen pour verrouiller au moins partiellement le deuxième élément de masse sur le boîtier est configuré pour restreindre ou empêcher le transfert d'une quantité de mouvement du premier élément de masse au deuxième élément de masse et/ou pour restreindre ou empêcher un mouvement relatif entre le premier élément de masse et le deuxième élément de masse lorsque le premier élément de masse et/ou le deuxième élément de masse a une accélération en dessous du premier seuil,
dans lequel une force d'attraction de l'agencement de verrouillage magnétique est surmontée lorsque l'accélération est au-dessus du premier seuil, de sorte qu'une force d'inertie sur le deuxième élément de masse surmonte la force magnétique d'attraction, permettant au deuxième élément de masse de se déplacer librement lorsqu'il est touché par le premier élément de masse ; et
en cours d'utilisation, les premier et deuxième éléments de masse et le boîtier de l'appareil restent alignés.

**2.** Appareil selon la revendication 1, dans lequel le moyen pour verrouiller au moins partiellement le deuxième élément de masse sur le boîtier comprend un électroaimant.

**3.** Appareil selon l'une quelconque des revendications 1 et 2, dans lequel le moyen pour verrouiller au moins partiellement le deuxième élément de masse sur le boîtier comprend un agencement de verrouillage magnétique et mécanique.

**4.** Appareil selon l'une quelconque des revendications précédentes, comprenant en outre un premier arbre (48, 49) connecté au deuxième élément de masse à l'extérieur du premier élément de masse, dans lequel le deuxième élément de masse (34, 34') s'étend hors du premier élément de masse (32, 32') pour se connecter au premier arbre.

**5.** Appareil selon l'une quelconque des revendications précédentes, dans lequel les premier et deuxième éléments de masse interagissent pour générer une amplification de vitesse par transfert de quantité de mouvement.

**6.** Appareil selon l'une quelconque des revendications précédentes, dans lequel l'appareil est un collecteur d'énergie vibratoire.

**7.** Procédé comprenant :

le transfert d'une quantité de mouvement d'un premier élément de masse (32, 32') à un deuxième élément de masse (34, 34') situé à l'intérieur du premier élément de masse, de sorte que de l'énergie cinétique soit transférée du premier élément de masse au deuxième élément de masse par des collisions séquentielles, le premier élément de masse ayant une masse plus grande que le deuxième élément de masse, dans lequel soit le premier élément de masse comporte un ou plusieurs aimants permanents et le deuxième élément de masse comporte une ou plusieurs bobines, soit le deuxième élément de masse comporte un ou plusieurs aimants permanents et le premier élément de masse comporte une ou plusieurs bobines, dans lequel le deuxième élément de masse est monté à l'intérieur du premier élément de masse de sorte que le deuxième élément de masse soit libre de se déplacer à l'intérieur du premier élément de masse, et dans lequel le transfert d'une quantité de mouvement du premier élément de masse au deuxième élément de masse est limité ou empêché lorsque le premier élément de masse et/ou le deuxième élément de masse a une accélération en dessous du premier seuil, dans lequel le premier élément de masse (32) est connecté à un sommet d'un appareil via un premier ressort et/ou à une base de l'appareil via un deuxième ressort, et dans lequel, en cours d'utilisation, les premier et deuxième éléments de masse et un boîtier de l'appareil restent alignés ;
le verrouillage au moins partiel du deuxième élément de masse sur le boîtier, par un agencement de verrouillage magnétique (82), lorsque le premier élément de masse et/ou le deuxième élément de masse a une accélération en dessous d'un premier seuil, dans lequel une force d'attraction de l'agencement de verrouillage magnétique est surmontée lorsque l'accélération est au-dessus du premier seuil, de sorte qu'une force d'inertie sur le deuxième élément de masse surmonte la force magnétique d'attraction, permettant au deuxième élément de masse de se déplacer librement lorsqu'il est touché par le premier élément de masse ; et

l'induction d'un courant dans les bobines lorsque le deuxième élément de masse se déplace par rapport au premier élément de masse.

8. Procédé selon la revendication 7, dans lequel une quantité de mouvement est transférée par une interaction comportant des collisions sensiblement élastiques.

9. Procédé selon l'une quelconque des revendications 7 et 8, dans lequel le deuxième élément de masse est au moins partiellement verrouillé sur le boîtier de l'appareil lorsque le premier élément de masse et/ou le deuxième élément de masse a une accélération en dessous d'un premier seuil par un agencement de verrouillage magnétique et mécanique.

10. Système comprenant un appareil selon l'une quelconque des revendications 1 à 6, ou mis en œuvre selon le procédé de l'une quelconque des revendications 7 à 9, le système comprenant en outre un moyen pour convertir le courant induit dans les bobines en une alimentation en courant continu.

11. Capteur comprenant une alimentation électrique incorporant un appareil selon l'une quelconque des revendications 1 à 6 ou un système selon la revendication 10.

Vibration energy → Mechanical to electrical conversion → Power conditioning and storage → Load

2    4    6    8

1

*FIG. 1*

25    16    21    17b

17a    12

14

17c

22    18    26

10

*FIG. 2*

*FIG. 3*

*FIG. 4*

*FIG. 5*

*FIG. 6*

104

106

108

110

102

*FIG. 7*

100

---

122

Acceleration-dependent
locking of second mass

124

Selective transfer of
momentum from first to
second mass element

126

Induce current based on
relative motion

128

Generate DC output

*FIG. 8*

120

*FIG. 9*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130342032 A
- EP 2882092 A
- US 20110074162 A